# EUROPÄISCHE PATENTSCHRIFT

(11) **EP 0 363 319 B1**
(45) Veröffentlichungstag und Bekanntmachung des Hinweises auf die Patenterteilung: **31.03.1993**
(21) Anmeldenummer: 89810729.7
(22) Anmeldetag: 26.09.1989
(51) Int. Cl.: C08F 283/06

(54) **Wasserlösliche oder in Wasser dispergierbare Pfropfpolymerisate, deren Herstellung und Verwendung**
Water soluble or water dispersable graft polymers, their manufacture and their use
Polymères greffés solubles ou dispersables dans l'eau, ainsi que leur préparation et leur application

(30) Priorität: 03.10.1988 CH 3665/88
(43) Veröffentlichungstag der Anmeldung: 11.04.1990
(73) Patentinhaber: CIBA-GEIGY AG, 4002 Basel (CH)
(72) Erfinder: Berendt, Hans-Ulrich, CH-4123 Allschwil (CH)

(56) Entgegenhaltungen:
- EP-A- 0 111 454
- EP-A- 0 245 202
- DE-B- 1 220 135
- FR-A- 1 277 220

## Beschreibung

Die vorliegende Anmeldung betrifft neue wasserlösliche oder in Wasser dispergierbare Pfropfpolymerisate, Verfahren zu ihrer Herstellung und ihre mannigfache Verwendung z.B. als Färbereihilfsmittel wie Foulardierhilfsmittel oder Flottenbindemittel, als Textilhilfsmittel z.B. im Schaumdruckverfahren.

In der EP-A-0,111,454 wird ein Verfahren zum Klotzfärben von Textilmaterialien mit Substantiv- oder Reaktivfarbstoffen beschrieben. Die Färbeklotzflotten enthalten dabei ausser den Farbstoffen als Färbereihilfsprodukt ein Pfropfpolymerisat aus einem Anlagerungsprodukt von einem Alkylenoxid an einen mindestens dreiwertigen Alkohol mit 3 bis 10 Kohlenwasserstoffen und Acrylamid oder Methacrylamid.

Die neuen Pfropfpolymerisate sind dadurch gekennzeichnet, dass sie aus
(A) 2 - 30 Gew.-% eines Anlagerungsproduktes von Alkylenoxid an einen mindestens dreiwertigen aliphatischen Alkohol mit 3 bis 10 Kohlenstoffatomen und
(B) 70 - 98 Gew.-% eines aufgepfropften Monomerengemisches aus
   (1) 20 bis 50 Gew.-% eines gegebenenfalls N-substituierten Acrylamid oder Methacrylamid und
   (2) 50 bis 80 Gew.-% eines N-vinylsubstituierten Amids oder eines Vinylesters jeweils einer gesättigten aliphatischen Monocarbonsäure,
   wobei sich die Summen von (A) und (B) bzw. (1) und (2) jeweils zu 100 % ergänzen, erhältlich sind.

Als Alkylenoxid kommen bei vorliegender Herstellung der Pfropfgrundlage (Komponente (A)) Ethylenoxid, Propylenoxid, Butylenoxid oder abwechslungsweise Ethylenoxid und Propylenoxid oder Mischungen von Ethylenoxid und Propylenoxid in Betracht. Bevorzugt ist Propylenoxid. Die aliphatischen Alkohole können drei- bis sechswertig sein.

Als Propfgrundlage geeignet sind Anlagerungsprodukte von 4 bis 100 Mol, vorzugsweise 40 bis 80 Mol Propylenoxid an 3 bis 6 Kohlenstoffatome aufweisende drei- bis sechswertige Alkanole. Diese Alkanole können geradkettig oder verzweigt sein. Als Beispiele seien Glycerin, Trimethylolethan, Trimethylolpropan, Erythrit, Pentaerythrit, Mannit oder Sorbit.

Weitere geeignete Pfropfgrundlagen sind Anlagerungsprodukte von Gemischen aus Ethylenoxid und Propylenoxid oder auch von Ethylenoxid allein an die genannten mehrwertigen Alkohole.

Als besonders geeignet haben sich Pfropfgrundlagen aus Anlagerungsprodukten von 40 bis 80 Mol Propylenoxid an 1 Mol Glycerin erwiesen.

Beispiele für erfindungsgemäss verwendete Monomere (1) sind Acrylamid oder Methacrylamid, die z.B. jeweils durch C₁-C₅-Alkylreste, C₂-C₄-Hydroxyalkylgruppen, C₂-C₄-Alkoxyalkylgruppen, Di-C₁-C₄-alkylamino-C₁-C₅-alkylgruppen oder durch Acetyl oder Acetyl-C₁-C₅-alkyl oder durch -CH₂CONH₂ oder 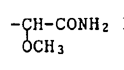
N-substituiert sein können, wie z.B. N-Methylacrylamid, N,N-Dimethylacrylamid, N-Methoxymethylacrylamid, N-β-Hydroxyethylacrylamid, N-Diacetonacrylamid, N-Acetylacrylamid, N-Acryloylamidoessigsäureamid (Acryloylglycin) oder N-Acryloylamidomethoxyessigsäureamid sowie auch N,N-di-β-hydroxyethylacrylamid, Mannichbasen des Acrylsäure- und Methacrylsäureamids, wie z.B. N-Di(C₁-C₄-alkylamino)methyl-acrylamide und weitere N-alkylsubstituierte Acrylamide oder Methacrylamide, die am Alkylrest eine tertiäre Aminogruppe tragen, wie z.B. Dimethylaminopropylacrylamid, Diethylaminopropylacrylamid, Dimethylaminopropylmethacrylamid, Dimethylamino-2,2-dimethylpropylacrylamid oder -methacrylamid. Es können auch Mischungen der Acrylamidmonomere (1) verwendet werden. Besonders bevorzugte Acrylamidmonomere (1) sind Methacrylamid oder vorallem Acrylamid.

Zu den erfindungsgemäss mitzuverwendenden Vinylverbindungen (2) gehören insbesondere N-vinylsubstituierte Amide aliphatischer gesättigter Monocarbonsäuren mit 1 bis 4 Kohlenstoffatomen, wie z.B. N-Vinylformamid, N-Vinyl-N-methyl-formamid, N-Vinylacetamid, N-Methyl-N-vinylacetamid, N-Ethyl-N-vinylacetamid. Weiter werden unter Vinylverbindungen (2) Vinylester aliphatischer gesättigter Monocarbonsäuren mit 1 bis 4 C-Atomen, wie z.B. Vinylacetat, Vinylpropionat oder Vinylbutyrat verstanden.

Die erfindungsgemässen Pfropfpolymerisate enthalten vorteilhafterweise 4 bis 15 Gew.-% des definierten Anlagerungsproduktes (A) als Basispolymer und 85 bis 96 Gew.-% des aufgepfropften Gemisches (B). Das Monomerengemisch besteht insbesondere aus 25 bis 48 Gew.-% der Acrylamidverbindung (1) und 52 bis 75 Gew.-% der Vinylverbindung (2). Sowohl die Summe der Komponenten (A) und (B) als auch der Komponenten (1) und (2) beträgt 100 %.

Unter diesen Produkten werden solche bevorzugt, die als Pfropfgrundlage 3 bis 10 Gew.-% des Anlagerungsproduktes von 40 bis 80 Mol Propylenoxid an 1 Mol Glycerin, 35 bis 48 Gew.-% Acrylamid und 42 bis 60 Gew.-% N-Methyl-N-vinylacetamid, wobei die Summe der umgesetzten Komponenten 100 % beträgt, enthalten. Die angegebenen Prozentsätze beziehen sich auf das gesamte Pfropfpolymerisat.

Die Herstellung der erfindungsgemäss verwendeten Pfropfpolymerisate erfolgt nach an sich bekannten Methoden, zweckmässig in der Weise, dass man (a) ein Anlagerungsprodukt von einem Alkylenoxid an einen mindestens dreiwertigen aliphatischen Alkohol von 3 bis 10 Kohlenstoffatomen mit (b) dem Monomerengemisch aus (1) und (2) und in Gegenwart von Katalysatoren, zweckmässig bei einer Temperatur von 40 bis 100°C polymerisiert. Man erhält somit vorwiegend Pfropfpolymerisate, in denen das Alkylenoxidaddukt die Stammkette bildet, die an Kohlenstoffatome das aufgepfropfte Monomerengemisch in Form von Seitenketten enthält.

Bei der Pfropfpolymerisation zur Herstellung der erfindungsgemässen Polymerisate entstehen häufig zusätzlich als Nebenprodukte Copolymerisate aus den Monomeren (1) und (2). Diese Nebenprodukte entstehen besonders dann, wenn grosse Mengen Monomere (1) und (2) auf kleine Mengen des Basispolymers (A) gepfropft werden.

Als Katalysatoren werden zweckmässigerweise freie Radikale bildende organische oder anorganische Initiatoren verwendet. Geeignete organische Initiatoren zur Durchführung der radikalischen Polymerisation sind z.B. Azoamide, wie z.B. Azo-bis-2-methyl-(1,1-dimethyl-2-hydroxyethyl)propionamid, 2,2′-Azo-bis-(2-methyl-propiohydroxaminsäure), 2,2′-Azo-bis-2-[N-phenylamidino]-propan-dihydrochlorid, 2,2′-Azo-bis-2-methylpropionsäurehydrazid, 2,2′-Azo-bis-N,N-dimethylenisobutylamidin oder besonders 2,2′-Azo-bis-(2-amidinopropan)-dihydrochlorid. Geeignete anorganische Initiatoren sind Wasserstoffsuperoxid, Perborate, Percarbonate, wie z.B. Natriumpercarbonat, Persulfate, Peroxidisulfate, wie z.B. Kaliumperoxiddisulfat sowie aus der einschlägigen Literatur bekannte Redox-Systeme.

Diese Katalysatoren können in Mengen von 0,05 bis 2 Gewichtsprozent vorteilhafterweise 0,05 bis 1 Gewichtsprozent und vorzugweise 0,1 bis 0,5 Gewichtsprozent, bezogen auf die Ausgangsprodukte eingesetzt werden.

Die Pfropfpolymerisation wird vorteilhafterweise in inerter Atmosphäre z.B. in Gegenwart von Stickstoff durchgeführt.

Die Pfropfpolymerisate fallen als sehr viskose Masse an. Durch Lösen und Verdünnen mit Wasser kann man gelartige Produkte mit einem Trockengehalt von z.B. 0,5 bis 20 Gew.-%, vorzugsweise 2 bis 10 Gew.-% herstellen. Zur Konservierung und/oder Verbesserung der Lagerstabilität der erhaltenen wässerigen Pfropfpolymerisatlösungen können Konservierungsmittel, wie z.B. Chloracetamid, N-Hydroxymethylchloracetamid, Pentachlorphenolate, Alkalimetallnitrite, Triethanolamin oder Hydrochinonmonomethylether oder auch antibakterielle Mittel, wie z.B. Natriumazid oder oberflächenaktive quaternäre Ammoniumverbindungen, die einen oder zwei Fettalkylreste aufweisen, zugesetzt werden. Vorteilhafterweise können auch Mischungen dieser Konservierungsmittel und keimtötenden Verbindungen eingesetzt werden.

Die besonders bevorzugten 2-10 Gew.%igen Lösungen der erhaltenen Pfropfpolymerisate zeigen nicht idealviskoses, sondern pseudoplastisches Fliessverhalten. Sie haben, je nach Schergeschwindigkeit, bei 20°C eine dynamische Viskosität zwischen 100 und 100'000, vorzugsweise 1000 bis 50'000 und insbesondere 1000 bis 20'000 mPa·s (milli Pascal Sekunde).

Die neuen Pfropfpolymerisate werden insbesondere als Färbereihilfsmittel beim kontinuierlichen oder halbkontinuierlichen Färben (oder Bedrucken) von cellulosehaltigem Textilgut verwendet.

Gegenstand der vorliegenden Erfindung ist demnach auch ein Verfahren zum Färben von Textilmaterialien, die ganz oder teilweise aus Cellulosefasern bestehen, mit substantiven Farbstoffen oder vorzugsweise mit Reaktivfarbstoffen, welches Verfahren dadurch gekennzeichnet ist, dass man die Textilmaterialien mit einer wässerigen Flotte, die ausser den Farbstoffen erfindungsgemässe Pfropfpolymerisate enthält, imprägniert und anschliessend die Fixierung der Farbstoffe durch Hitzeeinwirkung oder nach dem Kaltverweilverfahren durchführt.

Die Einsatzmengen, in denen die Pfropfpolymerisate zu den Färbeflotten zugesetzt werden, können in weiten Grenzen schwanken. So haben sich Mengen von 2 bis 40 g, vorzugsweise 5 bis 20 g in Form von 3 bis 10 % wässrigen Lösungen, je Liter Färbeflotte vorteilhaft erwiesen.

Die erfindungsgemässen Pfropfpolymerisate eignen sich insbesondere für das kontinuierliche oder halbkontinuierliche Färben von Textilien, die aus Cellulose bestehen oder diese enthalten, mit substantiven Farbstoffen oder vorzugsweise Reaktivfarbstoffen, wobei die Cellulosematerialien nach der Imprägnierung einem Hitzebehandlungsprozess unterworfen werden können, um die applizierten Farbstoffe zu fixieren. Vorzugsweise erfolgt die Fixierung der Farbstoffe nach der Kaltverweilmethode.

Als Cellulosefasermaterial kommt solches aus regenerierter oder insbesondere natürlicher Cellulose in Betracht, wie z.B. Zellwolle, Viskoseseide, Hanf, Leinen, Jute oder vorzugsweise Baumwolle, sowie Fasermischungen z.B. solche aus Polyamid/Baumwolle oder insbesondere aus Polyester/Baumwolle, wobei der Polyesteranteil mit Dispersionsfarbstoffen vor-, gleichzeitig oder nachgefärbt werden kann.

Das Textilgut ist in jeglicher Form anwendbar, wie z.B. Garne, Garnstränge, Gewebe, Gewirke, Filze, vorzugsweise in Form von textilen Flächengebilden, wie Gewebe, Maschenware oder Teppich, die ganz oder teilweise aus nativer, regenerierter oder modifizierter Cellulose bestehen. Es kann sowohl rohe als auch vorbehandelte Ware verwendet werden.

Als Substantivfarbstoffe sind die üblichen Direktfarbstoffe geeignet, beispielsweise die im Colour Index, 3. Auflage (1971) Band 2 auf den Seiten 2005-2478 genannten "Direct Dyes".

Unter Reaktivfarbstoffen werden die üblichen Farbstoffe verstanden, welche mit der Cellulose eine chemische Bindung eingehen, z.B. die in Colour Index, in Band 3 (3. Auflage, 1971) auf den Seiten 3391-3560 und in Band 6 (revidierte 3. Auflage, 1975) auf den Seiten 6268-6345 aufgeführten "Reactive Dyes". Küpenfarbstoffe können auch verwendet werden.

Die Menge der Farbstoffe richtet sich in der Regel nach der gewünschten Farbstärke und beträgt zweckmässig 0,1 bis 80 g pro Liter Flotte, vorzugsweise 2 bis 50 g/l Flotte.

Bei Verwendung von Reaktivfarbstoffen enthalten die Zubereitungen in der Regel Fixieralkalien.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender, wie z.B. Natriumtrichloracetat eingesetzt. Als Alkali hat sich insbesondere eine Mischung aus Wasserglas und einer 30%-igen wässerigen Natriumhydroxidlösung sehr gut bewährt.

Der pH-Wert der Alkali enthaltenden Färbeflotten beträgt in der Regel 7,5 bis 13,2 vorzugsweise 8,5 bis 11,5.

Die Färbeflotten werden zweckmässigerweise durch Lösen des Farbstoffes und durch Zusatz der erfindungsgemässen Pfropfpolymerisate und gegebenenfalls von Alkali vorbereitet. Je nach dem verwendeten Farbstoff können die Färbeflotten weitere übliche Zusätze enthalten, z.B. Elektrolyte, wie z.B. Natriumchlorid oder Natriumsulfat sowie auch Sequestrierungsmittel, Reduktionsschutzmittel, wie z.B. Nitrobenzolsulfonsäure-Natriumsalz ferner Harnstoff, Glycerin und/oder Natriumformiat. Gegebenenfalls können auch Verdickungsmittel, wie z.B. Alginate, Cellulosederivate, Stärkeether oder Kernmehlether wie Johannisbrotkernmehlether darin enthalten sein.

Die Imprägnierung des cellulosehaltigen Textilgutes kann durch Auftragen, Besprühen oder vorzugsweise durch Klotzen der Färbeflotte erfolgen.

Nach der Imprägnierung werden die Farbstoffe durch Hitzeeinwirkung oder vorzugsweise nach der Kalt-Verweilmethode fixiert.

Die Thermofixierstufe kann durch ein Dämpfverfahren, ein Warmverweilverfahren, einen Thermosolierprozess oder durch eine Mikrowellenbehandlung durchgeführt werden.

Beim Dämpfverfahren werden die mit der Färbeflotte imprägnierten Textilmaterialien zur Fixierung der Farbstoffe einer Behandlung in einem Dämpfer mit gegebenenfalls überhitzten Dampf, zweckmässigerweise bei einer Temperatur von 98 bis 210°C, vorteilhafterweise 100 bis 180°C und vorzugsweise 102 bis 120°C unterzogen.

Beim Warmverweilverfahren lässt man die imprägnierte Ware im feuchten Zustand z.B. 1 bis 120 Minuten lang, vorteilhafterweise bei Temperaturen von 85 bis 102°C verweilen. Hierbei kann die benetzte Ware durch eine Infrarot-Behandlung auf 85 bis 102°C vorgeheizt werden. Bevorzugt beträgt die Verweiltemperatur 95 bis 100°C.

Die Fixierung der Farbstoffe durch den sogenannten Thermosolierprozess kann nach einer oder ohne Zwischentrocknung z.B. bei einer Temperatur von 100 bis 210°C erfolgen. Vorzugsweise erfolgt die Thermosolierung bei einer Temperatur von 120 bis 220°C, vorzugsweise 140 bis 180°C und nach einer Zwischentrocknung bei 80 bis 120°C der imprägnierten Ware. Je nach der Temperatur kann die Thermosolierung 20 Sekunden bis 5 Minuten, vorzugsweise 30 bis 60 Sekunden dauern.

Die Thermofixierung der Farbstoffe kann auch mittels Mikrowellen durchgeführt werden. Hierbei wird die Ware nach Imprägnierung mit der Färbeflotte, kontinuierlich oder diskontinuierlich und in einer Kammer mittels Mikrowellen behandelt.

Die Mikrowellenbehandlung kann 5 Sekunden bis 120 Minuten dauern. Vorzugsweise reichen 30 Sekunden bis 5 Minuten aus. Als Mikrowellen bezeichnet man elektromagnetische Wellen (Radiowellen) im Frequenzbereich von 300 bis 100'000 MHz, vorzugsweise 1000 bis 30'000 MHz (méga hertz).

Die Fixierung der Farbstoffe gemäss dem Kaltverweilverfahren erfolgt zweckmässigerweise durch Lagerung der imprägnierten und vorzugsweise abgetafelten oder aufgerollten Ware bei Raumtemperatur (15 bis 30°C) z.B. während 3 bis 24 Stunden, wobei die Kaltverweilzeit bekanntlich Farbstoff abhängig ist. Gegebenenfalls kann auch bei leicht erhöhter Temperatur (30 bis 80°C) gelagert werden.

Im Anschluss an den Färbeprozess kann man das gefärbte Cellulosematerial in üblicher Weise auswaschen, um nichtfixierten Farbstoff zu entfernen. Man behandelt dazu das Substrat beispielsweise bei 40°C bis Kochtemperatur in einer Lösung, die Seife oder synthetisches Waschmittel enthält. Anschliessend kann zur Verbesserung der Nassechtheiten eine Behandlung mit einem Fixiermittel erfolgen.

Man erhält mit dem erfindungsgemässen Verfahren egale und farbkräftige Färbungen, die sich durch ein ruhiges Warenbild auszeichnen. Desweiteren werden die Gebrauchsechtheiten der gefärbten Ware, wie z.B. Lichtechtheit, Reibechtheit und Nassechtheiten durch den Einsatz des definierten Pfropfpolymerisates nicht negativ beeinflusst. Insbesondere kann eine hervorragende Durchfärbung der Ware auf Rohware erreicht werden.

Die erfindungsgemässen Pfropfpolymerisate eignen sich auch beim Färben oder Bedrucken von cellulosehaltigem Textilgut mit Reaktivfarbstoffen oder Küpenfarbstoffen mit Hilfe von Schaum, wobei sie wesentlich zur Standschärfe beitragen und zudem unter Ausschluss der üblichen Verdicker, insbesondere Alginate gearbeitet werden kann.

In den folgenden Beispielen beziehen sich die Prozentansätze, wenn nichts anderes angegeben ist, auf das Gewicht. Die Mengen beziehen sich bei den Farbstoffen auf handelsübliche, d.h. coupierte Ware und bei den Hilfsmitteln auf Reinsubstanz.

### Herstellungsbeispiele

### Beispiel 1:

Eine Lösung von 34,12 g Acrylamid, 51,55 g N-Methyl-N-Vinylacetamid, 3,75 g eines Anlagerungsproduktes von Propylenoxid an Glycerin mit einem durchschnittlichen Molekulargewicht von 4200 und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 60°C aufgeheizt. Nach weiteren 10 Minuten nimmt die Viskosität der Lösung schnell zu. Man verdünnt während 1 1/2 Stunden durch Zutropfen von 1102,3 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1491,7 g einer leicht opaken Lösung mit einem Polymergehalt von 6 Gewichtsprozent.

Das Produkt zeigt pseudoplastisches Verhalten. Dynamische Viskosität einer 1,5%-igen Lösungs in mPa·s bei 20°C als Funktion der Mess-Schergeschwindigkeit D.
Gerät: Rheomat RM 15,MS 45

Schergeschwindigkeit D (s⁻¹)
8,35 11,1 14,3 19,0 24,9 35,3 47,1 61,5 81,1 106 153
Dynamische Viskosität η (mPa·s):
429 396 357 316 279 233 200 175 152 131 107

### Beispiel 2:

Eine Lösung von 34,5 g Acrylamid, 40,5 g N-Methyl-N-Vinylacetamid, 3,8 g eines Anlagerungsproduktes von Propylenoxid an Glycerin mit einem durchschnittlichen Molekulargewicht von 4200 und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 65°C aufgeheizt. Nach weiteren 20 Minuten nimmt die Viskosität der Lösung schnell zu. Man verdünnt während 1 1/2 Stunden durch Zutropfen von 933,8 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1312,6 g einer leicht opaken Lösung mit einem Polymergehalt von 6 Gewichtsprozent.

Das Produkt zeigt pseudoplastisches Verhalten. Dynamische Viskosität einer 1,5%-igen Lösungs in mPa·s bei 20°C als Funktion der Mess-Schergeschwindigkeit D.
Gerät: Rheomat RM 15,MS 45

Schergeschwindigkeit D (s⁻¹)
8,35 11,1 14,3 19,0 24,9 35,3 47,1 61,5 81,1 106
Dynamische Viskosität η (mPa·s):
464 429 387 343 304 256 222 196 170 148

### Beispiel 3:

Eine Lösung von 34,5 g Acrylamid, 40,5 g N-Methyl-N-Vinylacetamid, 5,7 g eines Anlagerungsproduktes von Propylenoxid an Glycerin mit einem durchschnittlichen Molekulargewicht von 4200 und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 60°C aufgeheizt. Nach weiteren 25 Minuten nimmt die Viskosität der Lösung schnell zu. Man verdünnt während 1 1/2 Stunden durch Zutropfen von 1131,5 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1522,9 g einer leicht opaken Lösung mit einem Polymergehalt von 6 Gewichtsprozent.

Das Produkt zeigt pseudoplastisches Verhalten. Dynamische Viskosität einer 1,5%-igen Lösungs in mPa·s bei 20°C als Funktion der Mess-Schergeschwindigkeit D.
Gerät: Rheomat RM 15,MS 45

Schergeschwindigkeit D (s⁻¹)
8,35 11,1 14,3 19,0 24,9 35,3 47,1 61,5 81,1 106 153
Dynamische Viskosität η (mPa·s):
407 380 344 306 273 230 200 176 154 134 111

### Beispiel 4:

Eine Lösung von 34,12 g Acrylamid, 51,55 g N-Methyl-N-Vinylacetamid, 1,9 g eines Anlagerungsproduktes von Propylenoxid an Glycerin mit einem durchschnittlichen Molekulargewicht von 4200 und 0,09 g 2,2′-Azobis-(2-amidinopropan)-hydrochlorid in 300 g Wasser wird vorgelegt und unter Rühren und Ueberleiten von Stickstoff im Verlaufe von 10 Minuten auf 60°C aufgeheizt. Nach weiteren 60 Minuten nimmt die Viskosität der Lösung schnell zu. Man verdünnt während 1 1/2 Stunden durch Zutropfen von 1071,9 g Wasser; nach der Wasserzugabe wird 1 Stunde bei 60°C ausgerührt und dann weitere 12 Stunden zur Homogenisierung nachgerührt. Man fügt 0,01 g Chloracetamid zu und kühlt unter Rühren auf Raumtemperatur ab. Man erhält 1459,5 g einer leicht opaken Lösung mit einem Polymergehalt von 6 Gewichtsprozent.

Das Produkt zeigt pseudoplastisches Verhalten. Dynamische Viskosität einer 1,5%-igen Lösungs in mPa·s bei 20°C als Funktion der Mess-Schergeschwindigkeit D.
Gerät: Rheomat RM 15,MS 45

Schergeschwindigkeit D (s⁻¹)
8,35 11,1 14,3 19,0 24,9 35,3 47,1 61,5 81,1 106 153
Dynamische Viskosität η (mPa·s):
196 192 180 169 158 142 129 119 107 96 83

Auf gleiche Art und Weise wie in den Beispielen 1 bis 4 beschrieben werden folgende Pfropfpolymerisate in Form von 6%-igen wässerigen Lösungen hergestellt. Dynamische Viskosität einer 1,5%-igen Lösung in mPa·s bei 20°C als Funktion der Mess-Schergeschwindigkeit D (s⁻¹).
Gerät: Rheomat RM 15,MS 45

### Beispiel 5:

Pfropfpolymerisat bestehend aus
4,82 % des Anlagerungsproduktes von Propylenoxid an Glycerin MG 4200
47,10 % N,N-Dimethylacrylamid
48,08 % N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
83,0 80,7 78,1 75,6 74,2 70,8 67,5 64,5 61,1 57,5 52,2

### Beispiel 6:

Pfropfpolymerisat bestehend aus
4,82 % des Anlagerungsproduktes von Propylenoxid an Glycerin MG 4200
42,35 % N-(Dimethylaminopropyl)-methacrylamid
52,83 % N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
276 268 271 266 263 261 255 247 240 227 213

### Beispiel 7:

Pfropfpolymerisat bestehend aus
4,82 % des Anlagerungsproduktes von Propylenoxid an Glycerin MG 4200
38,07 % Acrylamid
9,04 % Diacetonacrylamid
48,07 % N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
253,1 241,2 226,3 207,4 190,1 167,7 149,6 135,5 121,3 107,9 92,7

### Beispiel 8:

Pfropfpolymerisat bestehend aus
4,76 % des Anlagerungsproduktes von Propylenoxid an Glycerin MG 4200
46,99 % Acrylamid
48,25 % Vinylacetat

Schergeschwindigkeit D (s⁻¹)
14,3 19,0 24,9 35,3 47,1 61,5 81,1 106 153
Dynamische Viskosität η (mPa·s):
46,3 44,9 42,5 40,4 38,1 36,3 34,4 32,3 29,8

### Beispiel 9:

Pfropfpolymerisat bestehend aus
4,82 % des Anlagerungsproduktes von Propylenoxid an Glycerin MG 4200
45 % Acrylamid
25,09 % N-Vinyl-N-methylacetamid
25,09 % Vinylacetat

Schergeschwindigkeit D (s⁻¹)
8,35 11,1 14,3 19,0 24,9 35,3 47,1 61,5 81,1 106 153
Dynamische Viskosität η (mPa·s):
97,7 97 92,5 87,4 82,4 76,8 70,7 66,2 61,3 56,0 49,8

### Beispiel 10:

Pfropfpolymerisat aus
5 % des Anlagerungsproduktes von Propylenoxid an Glycerin MG 4200
30 % Acrylamid
10 % Methacrylamid
55 % N-Vinyl-N-methylacetamid

Schergeschwindigkeit D (s⁻¹)
35,3 47,1 61,5 81,1 106 153
Dynamische Viskosität η (mPa·s):
19,3 18,9 18,7 18,4 18,4 18,2

### Beispiel 11:

Pfropfpolymerisat aus
5 % des Anlagerungsproduktes von Propylenoxid an Glycerin MG 4200
40 % Acrylamid
6 % Diacetonacrylamid
49 % N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
305 291 269 244 221 192 169 152 135 119 108

### Beispiel 12:

Pfropfpolymerisat aus
5 % des Anlagerungsproduktes von Propylenoxid an Glycerin MG 4200
35 % Acrylamid
10 % N-Methoxymethylacrylamid
50 % N-Vinyl-N-methylacetamid

Schergeschwindigkeit D (s⁻¹)
19,0 24,9 35,3 47,1 61,5 81,1 106 153
Dynamische Viskosität η (mPa·s):
33,5 33,1 32,1 30,9 30,7 30,4 29,8 29,0

### Beispiel 13:

Pfropfpolymerisat bestehend aus
5 Gew.% des Anlagerungsproduktes von Propylenoxid an Glycerin MG 4200
45 Gew.% N-Methylacrylamid
50 Gew.% N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
72,5 71,7 69,4 66,6 64,8 60,7 57,8 55,0 52,0 48,7 44,5

### Beispiel 14:

Pfropfpolymerisat bestehend aus
5 Gew.% des Anlagerungsproduktes von Propylenoxid an Glycerin MG 4200
40 Gew.% Acrylamid
5 Gew.% N-(Dimethylaminopropyl)-methacrylamid
50 Gew.% N-Vinyl-N-methylacetamid

Schergeschwindigkeit D (s⁻¹)
8,35 11,1 14,3 19,0 24,9 35,3 47,1 61,5 81,1 106
Dynamische Viskosität η (mPa·s):
382 357 326 292 262 226 200 178 157 139

### Beispiel 15

Pfropfpolymerisat bestehend aus
5 Gew.% des Anlagerungsproduktes von Propylenoxid an Glycerin MG 4200
35 Gew.% Acrylamid
10 Gew.% N,N-Dimethylacrylamid
50 Gew.% N-Vinyl-N-methylacetamid

Schergeschwindigkeit D (s⁻¹)
8,35 11,1 14,3 19,0 24,9 35,3 47,1 61,5 81,1 106
Dynamische Viskosität η (mPa·s):
411 381 345 308 275 233 203 181 159 139

### Beispiel 16:

Pfropfpolymerisat bestehend aus
5 Gew.% des Anlagerungsproduktes von Propylenoxid an Glycerin MG 4200
25 Gew.% Acrylamid
18 Gew.% N-Methylacrylamid
52 Gew.% N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
181 178 168 155 145 130 117 107 96,4 86,3 74,8

### Beispiel 17:

Pfropfpolymerisat bestehend aus
5 Gew.% des Anlagerungsproduktes von Propylenoxid an Glycerin MG 4200
15 Gew.% N-Methylacrylamid
25 Gew.% Diacetonacrylamid
55 Gew.% N-Vinyl-N-methylacetamid

Schergeschwindigkeit D (s⁻¹)
8,35 11,1 14,3 19,0 24,9 35,3 47,1 61,5 81,1 106 153
Dynamische Viskosität η (mPa·s):
73,5 75,0 71,9 68,5 65,5 61,7 58,3 55,0 51,7 48,0 43,5

### Anwendungsbeispiele

### Beispiel 18:

Ein rohes Baumwollgewirke (165 g/m²) wird auf einem Foulard mit einer wässrigen Flotte, die im Liter 50 g des Farbstoffes der Formel 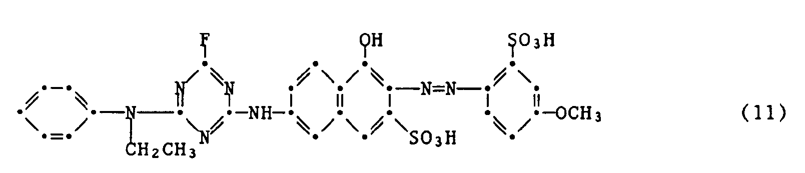
3,0 g eines Netzmittels bestehend aus Pentadekan-1-sulfonsäure-Natriumsalz und dem Anlagerungsprodukt von 4 Mol Ethylenoxid an 1 Mol eines C₉-C₁₁-primären Alkohols im Gewichtsverhältnis 3:1,
10 ml des gemäss Beispiel 1 hergestellten Pfropfpolymerisates,
10 ml Natriumhydroxidlösung (30 %) und
75 ml Natronwasserglaslösung mit 26,3-.27,7 % Silikatgehalt,
enthält, imprägniert, worauf nach dem Klotzen eine Flottenaufnahme von 186 % (berechnet auf das Trockengewicht des Substrates) erhalten wird. Das imprägnierte Gewirke wird aufgerollt und 5 Stunden bei Raumtemperatur gelagert. Hiernach wird das Gewirke gespült und 20 Minuten bei Kochtemperatur mit einem nicht-ionogenen Waschmittel (0,5 g/l des Additionsproduktes von 9 Mol Ethylenoxid an 1 Mol Nonylphenol) in einem Flottenverhältnis von 1:40 nachgewaschen. Anschliessend wird das Substrat nochmals gespült und getrocknet.

Man erhält eine farbstarke und brillante rote Färbung, die sich besonders durch ein ruhiges Warenbild auszeichnet.

Aehnlich gute Ergebnisse werden erhalten, wenn anstelle des Pfropfpolymerisates gemäss Beispiel 1 jeweils die gleiche Menge eines gemäss Beispiel 2 bis 17 hergestellten Pfropfpolymerisates verwendet wird.

### Beispiel 19:

Ein rohes Baumwollgewirke mit einem Flächengewicht von 165 g/m² wird auf einem Foulard bei 25°C mit einer Flotte, die im Liter 50 g des Farbstoffes der Formel (11)
2,5 g eines Netzmittels bestehend aus Pentadekan-1-sulfonsäure-Natriumsalz und dem Anlagerungsprodukt von 4 Mol Ethylenoxid an 1 Mol eines C₉-C₁₁-primären Alkohols im Gewichtsverhältnis 3:1,
4 ml eines gemäss Beispiel 1 hergestellten Pfropfpolymerisates,
10 ml Natriumhydroxidlösung (30 %) und
75 ml Natronwasserglaslösung mit 26,3-27,7 % Silikatgehalt,
enthält, imprägniert, worauf bei einer Tauchzeit von 0,86 Sekunden und einem Walzendruck von 1,5 bar/cm² eine Flottenaufnahme von 126 % (berechnet auf das Trockengewicht des Substrates) erzielt wird. Hiernach wird das Gewirke aufgerollt, in eine Plastikfolie eingewickelt und 3 Minuten mit Mikrowellen bei einer Frequenz von 2450 MHz behandelt. Alsdann wird das Gewirke gespült und 20 Minuten bei Kochtemperatur mit einem nichtionogenen Waschmittel (0,5 g/l des Additionsproduktes von 9 Mol Ethylenoxid an 1 Mol Nonylphenol) in einem Flottenverhältnis von 1:40 nachgewaschen. Anschliessend wird das Substrat nochmals gespült und getrocknet.

Man erhält eine farbstarke und brillante rote Färbung von guter Egalität.

### Beispiel 20:

Man stellt eine Druckfarbe her, die in 1 Liter Wasser folgende Zusätze enthält:
50 g eines Farbstoffes der Formel 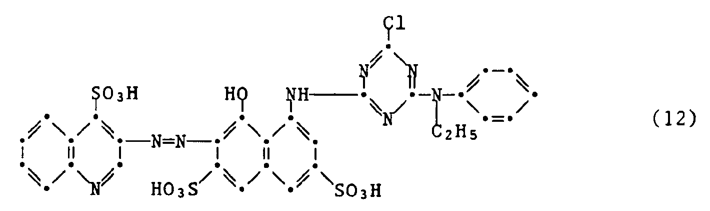
100 g einer wässerigen Mischung, die 7,5 g eines Anlagerungsproduktes von 2 Mol Ethylenoxid an 1 Mol Cetylalkohol und 0,025 g Natriumlaurylsulfat enthält,
4 g des gemäss Beispiel 1 hergestellten Pfropfpolymerisates,
10 g des Natriumsalzes von m-Nitrobenzolsulfonsäure,
60 g einer 25%-igen wässerigen Natriumcarbonatlösung und
100 g Harnstoff
enthält.

Hierauf wird die Druckfarbe in einem geschlossenen System über ein Schaumaggregat verschäumt. Der Verschäumungsgrad beträgt 180 g/l. Die Schaumhalbwertzeit ist 20 Stunden. Dieser Schaum wird durch Rohrleitungen über eine Siebschablone auf ein Baumwollgewebe mit einem Druck von 0,40 bar gepresst. Alsdann wird das bedruckte Gewebe 8 Minuten bei 102°C gedämpft, anschliessend wie üblich geseift und getrocknet.

Man erhält einen farbstarken, egalen, und scharfstehenden roten Druck mit einem ausgezeichneten Warengriff und guten Gebrauchsechtheiten.

## Patentansprüche

1. Pfropfpolymerisate, welche aus
(A) 2 - 30 Gew.-% eines Anlagerungsproduktes von Alkylenoxid an einen mindestens dreiwertigen aliphatischen Alkohol mit 3 bis 10 Kohlenstoffatomen und
(B) 70 - 98 Gew.-% eines aufgepfropften Monomerengemisches aus
(1) 20 bis 50 Gew.-% eines gegebenenfalls N-substituierten Acrylamid oder Methacrylamid und
(2) 50 bis 80 Gew.-% eines N-vinylsubstituierten Amids oder eines Vinylesters jeweils einer gesättigten aliphatischen Monocarbonsäure,
wobei sich die Summen von (A) und (B) bzw. (1) und (2) jeweils zu 100 % ergänzen, erhältlich sind.

2. Pfropfpolymerisate gemäss Anspruch 1, dadurch gekennzeichnet, dass die Pfropfgrundlage (A) ein Anlagerungsprodukt von 4 bis 100 Mol Propylenoxid an 3 bis 6 Kohlenstoffatome aufweisende drei- bis sechswertige Alkanole ist.

3. Pfropfpolymerisate gemäss einem der Ansprüche 1 und 2, dadurch gekennzeichnet, dass die Pfropfgrundlage (A) ein Anlagerungsprodukt von 40 bis 80 Mol Propylenoxid an 1 Mol Glycerin ist.

4. Pfropfpolymerisate gemäss einem der Ansprüche 1 bis 3, dadurch gekennzeichnet, dass das Monomer (1) Acrylamid oder Methacrylamid ist.

5. Pfropfpolymerisate gemäss einem der Ansprüche 1 bis 4, dadurch gekennzeichnet, dass das Monomer (2) N-Vinylacetamid, N-Methyl-N-vinylacetamid oder N-Ethyl-N-vinylacetamid ist.

6. Pfropfpolymerisate gemäss einem der Ansprüche 1 bis 5, dadurch gekennzeichnet, dass sie 4 bis 15 Gew.-% des Anlagerungsproduktes (A) und 85 bis 96 Gew.% des aufgepfropften Monomerengemisches (B) enthalten.

7. Pfropfpolymerisate gemäss einem der Ansprüche 1 bis 6, dadurch gekennzeichnet, dass das Monomerengemisch (B) aus 25 bis 48 Gew.% der Acrylamidverbindung (1) und 52 bis 75 Gew.% der Vinylverbindung (2) besteht.

8. Pfropfpolymerisate gemäss einem der Ansprüche 1 bis 7, dadurch gekennzeichnet, dass sie 3 bis 10 Gew.% des Anlagerungsproduktes von 40 bis 80 Mol Propylenoxid an 1 Mol Glycerin, 35 bis 48 Gew.% Acrylamid und 42 bis 60 Gew.% N-Methyl-N-vinylacetamid, wobei die Summe der umgesetzten Komponenten 100 % beträgt, enthalten.

9. Verfahren zum Färben von Textilmaterialien, die ganz oder teilweise aus Cellulosefasern bestehen, mit substantiven Farbstoffen oder Reaktivfarbstoffen, dadurch gekennzeichnet, dass man die Cellulosematerialien mit einer wässerigen Färbeflotte imprägniert, die ausser dem Farbstoff ein Pfropfpolymerisat, welches aus
(A) 2 - 30 Gew.-% eines Anlagerungsproduktes von Alkylenoxid an einen mindestens dreiwertigen aliphatischen Alkohol mit 3 bis 10 Kohlenstoffatomen und
(B) 70 - 98 Gew.-% eines aufgepfropften Monomerengemisches aus
(1) 20 bis 50 Gew.-% eines gegebenenfalls N-substituierten Acrylamid oder Methacrylamid und
(2) 50 bis 80 Gew.-% eines N-vinylsubstituierten Amids oder eines Vinylesters jeweils einer gesättigten aliphatischen Monocarbonsäure,
wobei sich die Summen von (A) und (B) bzw. (1) und (2) jeweils zu 100 % ergänzen, erhältlich ist, enthält und anschliessend die Fixierung der Farbstoffe durch Hitzeeinwirkung oder nach der Kaltverweilmethode durchführt.

10. Verfahren gemäss Anspruch 9, dadurch gekennzeichnet, dass die Färbeflotte zusätzlich zu dem Pfropfpolymerisat ein alkalibeständiges Netzmittel enthält.

11. Verfahren gemäss einem der Ansprüche 9 und 10, dadurch gekennzeichnet, dass die Färbeflotte das Pfropfpolymerisat in einer Menge von 2 bis 40 g, vorzugsweise 5 bis 20 g pro Liter in Form von 3 bis 10%-igen wässerigen Lösungen enthält.

12. Verfahren gemäss einem der Ansprüche 9 bis 11, dadurch gekennzeichnet, dass man mit Reaktivfarbstoffen färbt.

13. Verfahren gemäss einem der Ansprüche 9 bis 12, dadurch gekennzeichnet, dass die Fixierung der Farbstoffe mittels Mikrowellen erfolgt.

14. Verfahren gemäss einem der Ansprüche 9 bis 12, dadurch gekennzeichnet, dass die Fixierung der Farbstoffe nach dem Thermosol-Verfahren erfolgt.

15. Verfahren gemäss einem der Ansprüche 9 bis 12, dadurch gekennzeichnet, dass die Fixierung der Farbstoffe durch Dämpfen erfolgt.

16. Verfahren gemäss einem der Ansprüche 9 bis 12, dadurch gekennzeichnet, dass man die Fixierung der Farbstoffe nach der Kaltverweil-Methode durchführt.

## Claims

1. A graft polymer, which is obtainable from
(A) 2 - 30 % by weight of an addition product from alkylene oxide onto an aliphatic alcohol which is at least trihydric having 3 to 10 carbon atoms and
(B) 70 - 98 % by weight of a grafted-on monomer mixture of
(1) 20 to 50 % by weight of an N-substituted or N-unsubstituted acrylamide or methacrylamide and
(2) 50 to 80 % by weight of an N-vinyl-substituted amide or of a vinyl ester, derived in each case from a saturated aliphatic monocarboxylic acid,
where the sums of (A) and (B), and (1) and (2) in each case add up to 100 %.

2. A graft polymer according to claim 1, wherein the graft base (A) is an addition product from 4 to 100 mol of propylene oxide onto trihydric to hexahydric alkanols having 3 to 6 carbon atoms.

3. A graft polymer according to any one of claims 1 and 2, wherein the graft base (A) is an addition product from 40 to 80 mol of propylene oxide onto 1 mol of glycerol.

4. A graft polymer according to any one of claims 1 to 3, wherein the monomer (1) is acrylamide or methacrylamide.

5. A graft polymer according to any one of claims 1 to 4, wherein the monomer (2) is N-vinylacetamide, N-methyl-N-vinylacetamide or N-ethyl-N-vinylacetamide.

6. A graft polymer according to any one of claims 1 to 5, which contains 4 to 15 % by weight of the addition product (A) and 85 to 96 % by weight of the grafted-on monomer mixture (B).

7. A graft polymer according to any one of claims 1 to 6, wherein the monomer mixture (B) comprises 25 to 48 % by weight of the acrylamide compound (1) and 52 to 75 % by weight of the vinyl compound (2).

8. A graft polymer according to any one of claims 1 to 7 which contains 3 to 10 % by weight of the addition product from 40 to 80 mol of propylene oxide onto 1 mol of glycerol, 35 to 48 % by weight of acrylamide and 42 to 60 % by weight of N-methyl-N-vinylacetamide, the sum of the reacted components being 100 %.

9. A process for dyeing textile materials which consist wholly or partially of cellulose fibres, with direct dyes or reactive dyes, which process comprises impregnating the cellulose materials with an aqueous dyeing liquor which, in addition to the dye, contains a graft polymer which is obtainable from
(A) 2 - 30 % by weight of an addition product from alkylene oxide onto an aliphatic alcohol which is at least trihydric having 3 to 10 carbon atoms and
(B) 70 - 98 % by weight of a grafted-on monomer mixture of
(1) 20 to 50 % by weight of an N-substituted or N-unsubstituted acrylamide or methacrylamide and
(2) 50 to 80 % by weight of an N-vinyl-substituted amide or of a vinyl ester, derived in each case from a saturated aliphatic monocarboxylic acid,
where the sums of (A) and (B), and (1) and (2) in each case add up to 100 %, and then fixing the dye by a heat treatment or by the cold pad-batch method.

10. A process according to claim 9, wherein the dyeing liquor contains an alkali-resistant wetting agent in addition to the graft polymer.

11. A process according to any one of claims 9 and 10 wherein the dyeing liquor contains the graft polymer in an amount of from 2 to 40 g, preferably 5 to 20 g per litre in the form of 3 to 10 % aqueous solutions.

12. A process according to any one of claims 9 to 11, wherein reactive dyes are used.

13. A process according to any one of claims 9 to 12, wherein the fixation of the dyes is carried out using microwaves.

14. A process according to any one of claims 9 to 12, wherein the fixation of the dyes is carried out by thermosoling.

15. A process according to any one of claims 9 to 12, wherein the fixation of the dyes is carried out by steaming.

16. A process according to any one of claims 9 to 12, wherein the fixation of the dyes is carried out by the cold pad-batch method.

## Revendications

1. Polymères greffés, que l'on peut obtenir à partir de
(A) 2 à 30 % en poids d'un produit d'addition d'un oxyde d'alkylène sur un alcool aliphatique au moins trifonctionnel et comportant de 3 à 10 atomes de carbone, et
(B) 70 à 98 % en poids d'un mélange de monomères à greffer, constitué de
(1) 20 à 50 % en poids d'un acrylamide ou d'un méthacrylamide éventuellement substitué à l'azote, et
(2) 50 à 80 % en poids d'un amide substitué à l'azote par un groupe vinyle ou d'un ester de vinyle, dérivés chacun d'un acide monocarboxylique aliphatique saturé,
la quantité totale de (A) et (B), et celle de (1) et (2), valant chacune 100 %.

2. Polymères greffés conformes à la revendication 1, **caractérisé** en ce que la base de greffage (A) est un produit d'addition de 4 à 100 moles d'oxyde de propylène sur des alcanols trifonctionnels à hexafonctionnels, comportant de 3 à 6 atomes de carbone.

3. Polymères greffés conformes à l'une des revendications 1 et 2, **caractérisé** en ce que la base de greffage (A) est un produit d'addition de 40 à 80 moles d'oxyde de propylène sur 1 mole de glycérine.

4. Polymères greffés conformes à l'une des revendications 1 à 3, **caractérisé** en ce que le monomère (1) est de l'acrylamide ou du méthacrylamide.

5. Polymères greffés conformes à l'une des revendications 1 à 4, **caractérisé** en ce que le monomère (2) est du N-vinyl-acétamide, du N-méthyl-N-vinyl-acétamide ou du N-éthyl-N-vinyl-acétamide.

6. Polymères greffés conformes à l'une des revendications 1 à 5, **caractérisé** en ce qu'ils contiennent de 4 à 15 % en poids du produit d'addition (A) et de 85 à 96 % en poids du mélange de monomères greffés (B).

7. Polymères greffés conformes à l'une des revendications 1 à 6, **caractérisé** en ce que le mélange de monomères (B) est constitué de 25 à 48 % en poids du dérivé d'acrylamide (1) et de 52 à 75 % en poids du composé vinylique (2).

8. Polymères greffés conformes à l'une des revendications 1 à 7, **caractérisé** en ce qu'ils contiennent de 3 à 10 % en poids du produit d'addition de 40 à 80 moles d'oxyde de propylène sur 1 mole de glycérine, de 35 à 48 % en poids d'acrylamide et de 42 à 60 % en poids de N-méthyl-N-vinyl-acétamide, le total des composés mis à réagir représentant 100 %.

9. Procédé de teinture de matériaux textiles, totalement ou partiellement constitués de fibres de cellulose, avec des colorants substantifs ou des colorants réactifs, **caractérisé** en ce que l'on imprègne les matériaux de cellulose avec un bain de teinture aqueux qui contient, outre le colorant, un polymère greffé que l'on peut obtenir à partir de
(A) 2 à 30 % en poids d'un produit d'addition d'un oxyde d'alkylène sur un alcool aliphatique au moins trifonctionnel et comportant de 3 à 10 atomes de carbone, et
(B) 70 à 98 % en poids d'un mélange de monomères à greffer, constitué de
(1) 20 à 50 % en poids d'un acrylamide ou d'un méthacrylamide éventuellement substitué à l'azote, et
(2) 50 à 80 % en poids d'un amide substitué à l'azote par un groupe vinyle ou d'un ester de vinyle, dérivés chacun d'un acide monocarboxylique aliphatique saturé,
la quantité totale de (A) et (B), ainsi que celle de (1) et (2), représentant chacune 100 %,
et en ce que l'on réalise ensuite la fixation du colorant sous l'action de la chaleur ou selon le procédé d'abandon à froid.

10. Procédé conforme à la revendication 9, **caractérisé** en ce que le bain de teinture contient, en plus du polymère greffé, un agent mouillant stable en présence d'un alcali.

11. Procédé conforme à l'une des revendications 9 et 10, **caractérisé** en ce que le bain de teinture contient le polymère greffé en une quantité de 2 à 40 g, de préférence de 5 à 20 g, par litre, sous forme de solution aqueuse à une concentration de 3 à 10 %.

12. Procédé conforme à l'une des revendications 9 à 11, **caractérisé** en ce que l'on effectue la teinture avec des colorants réactifs.

13. Procédé conforme à l'une des revendications 9 à 12, **caractérisé** en ce que la fixation des colorants est réalisée à l'aide de micro-ondes.

14. Procédé conforme à l'une des revendications 9 à 12, **caractérisé** en ce que la fixation des colorants est effectuée selon le procédé Thermosol.

15. Procédé conforme à l'une des revendications 9 à 12, **caractérisé** en ce que la fixation des colorants est effectuée par vaporisage.

16. Procédé conforme à l'une des revendications 9 à 12, **caractérisé** en ce que la fixation des colorants est effectuée selon le procédé d'abandon à froid.
